# EUROPEAN PATENT SPECIFICATION

(11) **EP 2 136 289 B1**
(45) Date of publication and mention of the grant of the patent: **14.08.2013**
(21) Application number: 08158410.4
(22) Date of filing: 17.06.2008
(51) Int. Cl.: G06F 3/0338, G06F 3/0362, G06F 3/0354

(54) **Motion control assembly**
Bewegungssteueranordnung
Ensemble de contrôle du mouvement

(43) Date of publication of application: 23.12.2009
(73) Proprietor: Delphi Technologies, Inc., Troy, MI 48007 (US)
(72) Inventor: Bohdan, Lukasz, 47-330, Zdzieszowice (PL); Stachura, Mariusz, 32-700, Bochnia (PL)
(74) Representative: Robert, Vincent

(56) References cited:
- WO-A-93/18475
- WO-A-97/22050
- WO-A-2008/010155
- DE-A1-102006 007 600
- US-A- 5 327 162
- US-A1- 2006 290 670
- US-B1- 6 906 700

## Description

### Technical Field

The present invention relates to a motion control assembly for controlling the movement of a control knob, such as a joystick.

### Background of the Invention

Electrical switch assemblies are known which have a switch knob in the form of a joystick. Such known assemblies have limitations in terms of the number of separate switch actions or functions which are possible. Also, translation movement of the knob or joystick causes the knob or joystick to pivot relative to an associated cover plate, which may be unacceptable.

US-A-5327162 discloses an assembly including first, second and third planar members which are positioned adjacent one another. Complementary sliding means in adjacent surfaces of the first and second planar members allow relative movement in an X-direction. A tubular shaft attached to the third planar member extends through an elongated aperture in the second planar member to allow relative movement in a Y-direction perpendicular to the X-direction. A radially extending surface attached to the shaft engages the first planar member. A control knob shaft is mounted in the tubular shaft. US-A-6906700 discloses an assembly including first, second and third planar members. Complementary sliding means in adjacent surfaces of the first and second planar members, and adjacent surfaces of the second and third planar members, allows relative movement in the X- and/or Y-direction. Further the document WO 93/18475 discloses a known motion control assembly.

### Summary of the Invention

It is an object of the present invention to overcome the above mentioned disadvantages.

A motion control assembly, in accordance with the present invention, for a control knob comprises first, second and third substantially planar members positioned adjacent one another and each having first and second surfaces; wherein the control knob is positioned adjacent the first surface of the first planar member; wherein the second surface of the first planar member and the first surface of the second planar member have first complementary sliding means allowing the first and second planar members to slide relative to one another in a first direction; wherein the second surface of the second planar member and the first surface of the third planar member have second complementary sliding means allowing the second and third planar members to slide relative to one another in a second direction substantially perpendicular to the first direction; wherein the first and second directions lie in a plane substantially parallel with the planes of the planar members; a tubular shaft extending through apertures in the first and second planar members and being fixed to the third planar member, the tubular shaft having a longitudinal axis substantially perpendicular to the planes of the planar members and a radially extending surface slidably engaging the first surface of the first planar member; and a control knob shaft mounted in the tubular shaft and secured to the control knob.

In the present invention, the planar members and the complementary sliding means therebetween allow the control knob to move in a translational direction away from the longitudinal axis whilst maintaining the control knob in the same orientation relative to the first planar member. In preferred embodiments, the shafts are assembled so as to also allow rotation of the control knob about the longitudinal axis; and/or allow depression (push) of the control knob. Any one of these movements of the control knob, either individually or simultaneously, creates an option for actuation of a device associated with the control knob.

### Brief Description of the Drawings

The present invention will now be described, by way of example, with reference to the accompanying drawings, in which:-
Figure 1 is a schematic illustration of the potential movements of the control knob of the motion control assembly in accordance with the present invention;

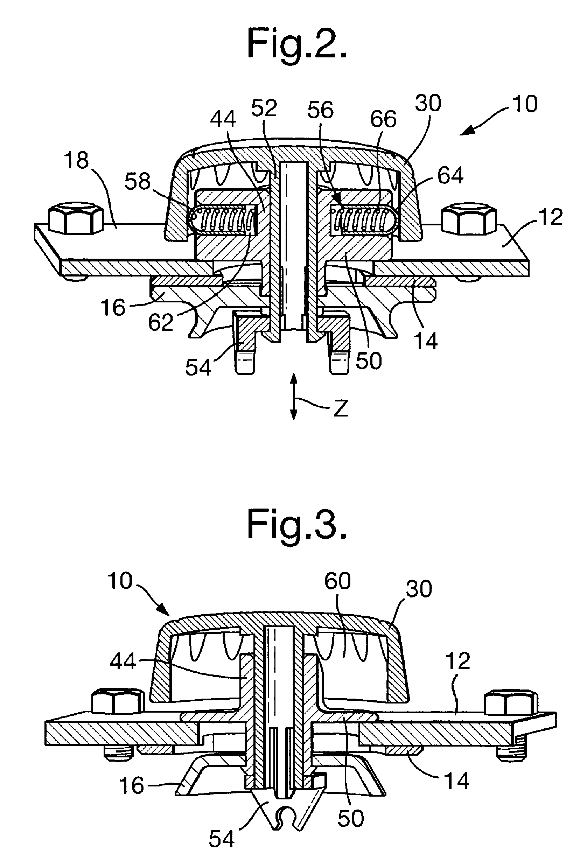

Figure 2 is a cross-sectional view of the motion control assembly in accordance with the present invention;
Figure 3 is a cross-sectional view of the motion control assembly of Figure 2 taken along another plane;

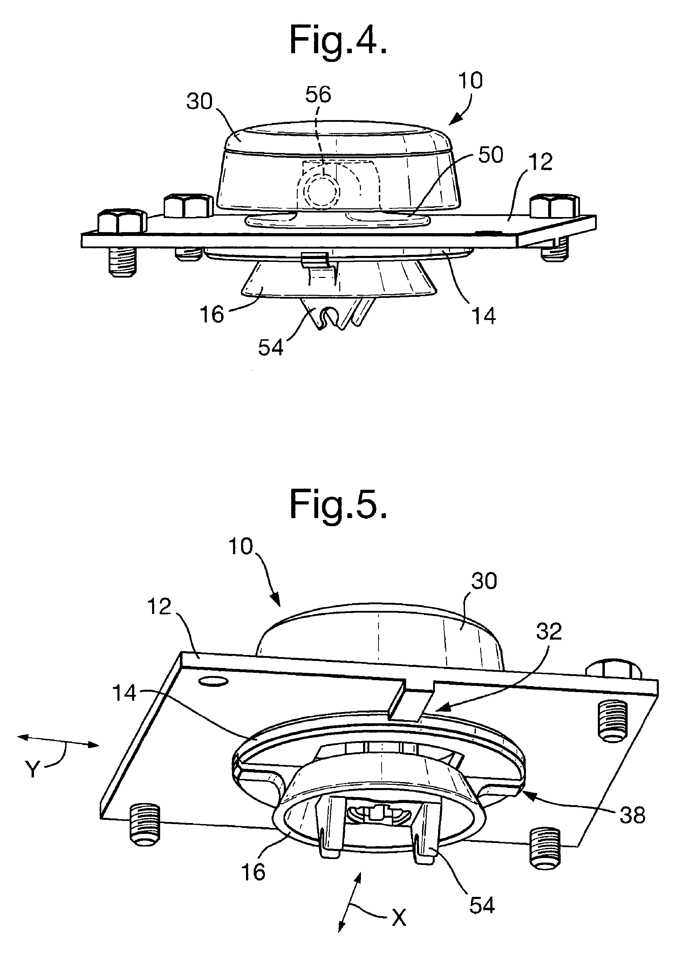

Figure 4 is a side view of the assembly of Figures 2 and 3;
Figure 5 is a perspective view of the assembly of Figures 2 and 3;

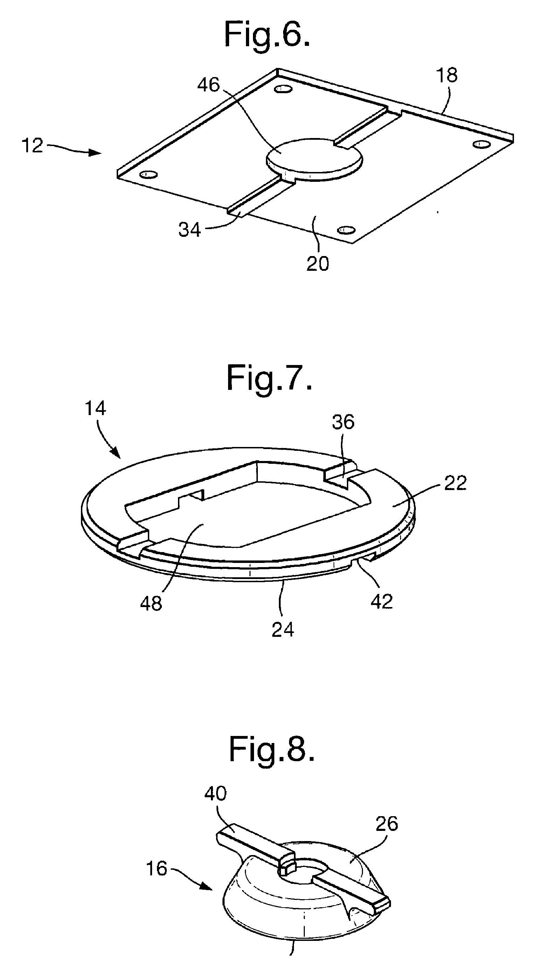

Figure 6 is a perspective view of the first planar member of the assembly of Figures 2 and 3;
Figure 7 is a perspective view of the second planar member of the assembly of Figures 2 and 3; and
Figure 8 is a perspective view of the third planar member of the assembly of Figures 2 and 3.

### Description of the Preferred Embodiment

Referring to the drawings, the motion control assembly 10 comprises a first substantially planar member 12, a second substantially planar member 14, and a third substantially planar member 16. The planar members 12-16 are positioned adjacent one another with their respective planes substantially parallel. The first planar member 12 has a first surface 18 and a second surface 20. The second planar member 14 has a first surface 22 and a second surface 24. The third planar member 16 has a first surface 26 and a second surface 28. A control knob 30 is positioned adjacent the first surface 18 of the first planar member 12.

First complementary sliding means 32 are associated with the second surface 20 of the first planar member 12 and the first surface 22 of the second planar member 14. The first complementary sliding means 32 allow the first and second planar members 12, 14 to slide relative to one another in a first direction X substantially parallel to the planes of the planar members 12-16. The first complementary sliding means 32 are preferably a ridge and groove arrangement, with a diametrically extending ridge 34 formed on the second surface 20 of the first planar member 12 sliding in a corresponding diametrically extending groove 36 formed in the first surface 22 of the second planar member 14. Alternatively, the groove may be formed in the second surface of the first planar member and the ridge may be formed in the first surface of the second planar member. Further alternative arrangements may be used for the first complementary sliding means.

Second complementary sliding means 38 are associated with the second surface 24 of the second planar member 14 and the first surface 26 of the third planar member 16. The second complementary sliding means 38 allow the second and third planar members 14, 16 to slide relative to one another in a second direction Y substantially parallel to the planes of the planar members 12-16, and substantially perpendicular to the first direction X. The second complementary sliding means 38 are preferably a ridge and groove arrangement, with a diametrically extending ridge 40 formed on the first surface 26 of the third planar member 16 sliding in a corresponding diametrically extending groove 42 formed in the second surface 24 of the second planar member 14. Alternatively, the groove may be formed in the first surface of the third planar member and the ridge may be formed in the second surface of the second planar member. Further alternative arrangements may be used for the second complementary sliding means.

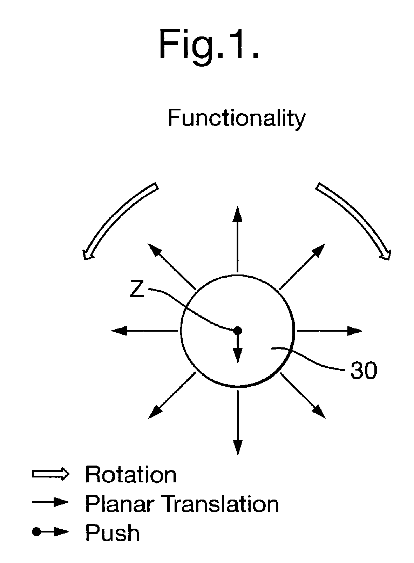

A tubular shaft 44 extends through apertures 46, 48 formed in the first and second planar members 12, 14 respectively and is secured to the third planar member 16. The tubular shaft 44 has a longitudinal axis Z which is substantially perpendicular to the first and second directions X, Y and the planes of the planar members 12-16. The tubular shaft 44 also has a radially extending collar 50, preferably integrally formed, which forms a surface which slidably engages the first surface 18 of the first planar member 12 to secure the assembly of the planar members 12-16 together and with the tubular shaft 44. The attachment of the tubular shaft 44 to the third planar member 16 is preferably by way of a snap-fit. Alternative attachment means may be used, such as adhesive. An alternative arrangement to the radially extending collar 50 may be used on the tubular shaft 44 to provide the contact surface with the first surface 18 of the first planar member 12. The apertures 46, 48 in the first and second planar members 12, 14 are shaped and sized to allow the desired or predetermined planar translation movement, as indicated in Figure 1, of the tubular shaft 44 relative to the first planar member 12 under the influence of the first and second complementary sliding means 32, 38.

The control knob 30 is secured to a control knob shaft 52 or is integrally formed therewith. The control knob shaft 52 is coaxial with the tubular shaft 44 and is mounted in the tubular shaft. Planar translation movement, as indicated in Figure 1, of the control knob 30 causes the planar translational movement of the tubular shaft 44, as described above, due to the mounting of the control knob shaft 52 in the tubular shaft 44. It will be appreciated that such movement of the control knob 30 does not cause the control knob to pivot relative to the first planar member 12. The control knob shaft 52 may be slidably mounted (in the axial direction Z) in the tubular shaft 44 allowing the control knob to be pushed (depressed) relative to the first planar member 12.

The control knob shaft 52 is also preferably rotatably mounted in the tubular shaft 44. In this case, the control knob 30 can rotate about the longitudinal axis Z relative to the first planar member 12. In order to provide an indication of indexing as the control knob 30 rotates, one or more indexing fingers 56 may be associated with the tubular shaft 44 which engage corresponding indents 58 in the inner surface 60 of the control knob. The or each indexing finger 56 is slidably mounted in a radially outwardly extending bore 62 integrally formed with the tubular shaft 44 on the opposed side of the collar 50 to the first planar surface 12. The or each finger 56 comprises a ball or piston element 64 slidably mounted in the bore 62 and biased radially outwards by a spring 66 into engagement with the inner surface 60 of the control knob 30.

The control knob shaft 52 preferably extends through the tubular shaft 44, and in this case, the end 54 of the control knob shaft 52 remote from the control knob 30 is securable to elements (not shown) associated with the device (not shown) being controlled or actuated by the control knob. A suitable example of such a device is described and claimed in EP patent application no. 08158408.8 (EP-A-2045826) (Applicant's reference DP-317107) filed the same day as the present application. The first planar member 12 may be part of a cover plate for such a device, or may be separately formed and secured to the cover plate.

In the present invention, the planar members 12-16 and the complementary sliding means 32, 38 therebetween allow the control knob 30 to move in a translational direction away from the longitudinal axis Z whilst maintaining the control knob in the same orientation relative to the first planar member 12. In the preferred embodiments, the shafts 44, 52 are assembled so as to also allow rotation of the control knob 30 about the longitudinal axis Z; and/or allow depression (push) of the control knob. Any one of these movements of the control knob 30, either individually or simultaneously, creates an option for actuation of a device associated with the control knob.

## Claims

1. A motion control assembly comprising a control knob (30); and first, second and third substantially planar members (12-16) positioned adjacent one another and each having first and second surfaces (18-28); wherein the control knob is positioned adjacent the first surface (18) of the first planar member (12); wherein the second surface (20) of the first planar member and the first surface (22) of the second planar member (14) have first complementary sliding means (32) allowing the first and second planar members to slide relative to one another in a first direction (X); wherein the second surface (24) of the second planar member and the first surface (26) of the third planar member (16) have second complementary sliding means (38) allowing the second and third planar members to slide relative to one another in a second direction (Y) substantially perpendicular to the first direction; wherein the first and second directions lie in a plane substantially parallel with the planes of the planar members; a tubular shaft (44) extending through apertures (46, 48) in the first and second planar members and being fixed to the third planar member, the tubular shaft having a longitudinal axis (Z) substantially perpendicular to the planes of the planar members and a radially extending surface (50) slidably engaging the first surface of the first planar member; and a control knob shaft (52) mounted in the tubular shaft and secured to the control knob.

2. A motion control assembly as claimed in Claim 1, wherein the first complementary sliding means (32) comprises a diametrically extending ridge (34) formed on one of the second surface (20) of the first planar member (12) or the first surface (22) of the second planar member (14) and a corresponding diametrically extending groove (36) formed in the other of the second surface (20) of the first planar member (12) or the first surface (22) of the second planar member (14).

3. A motion control assembly as claimed in Claim 1, wherein the second complementary sliding means (38) comprises a diametrically extending ridge (40) formed on one of the second surface (24) of the second planar member (14) or the first surface (26) of the third planar member (16) and a corresponding diametrically extending groove (42) formed in the other of the second surface (24) of the second planar member (14) or the first surface (26) of the third planar member (16).

4. A motion control assembly as claimed in any one of Claims 1 to 3, wherein the radially extending surface (50) of the tubular shaft (44) is defined by a radially extending collar (50) formed integrally with the tubular shaft.

5. A motion control assembly as claimed in any one of Claims 1 to 4, wherein the tubular shaft (44) is fixed to the third planar member (16) by a snap-fit.

6. A motion control assembly as claimed in any one of Claims 1 to 5, wherein the control knob shaft (52) extends through the tubular shaft (44).

7. A motion control assembly as claimed in any one of Claims 1 to 6, wherein the control knob shaft (52) is slidably mounted in the tubular shaft (44) for sliding motion along the longitudinal axis (Z) relative to the tubular shaft.

8. A motion control assembly as claimed in any one of Claims 1 to 7, wherein the control knob shaft (52) is rotatably mounted in the tubular shaft (44) for rotational motion about the longitudinal axis (Z) relative to the tubular shaft.

9. A motion control assembly as claimed in Claim 8, wherein one or more indexing fingers (56) engage the control knob (30) and the tubular shaft (44).

10. A motion control assembly as claimed in Claim 9, wherein the or each indexing finger (56) comprises a ball or piston (64) slidably mounted in a radially outwardly extending bore (62) formed with the tubular shaft (44) and biased into engagement the inner surface (60) of the control knob (30).

## Patentansprüche

1. Eine Bewegungssteuerungs-Baugruppe, die aufweist einen Steuerungsknopf (30); und erste, zweite und dritte, im Wesentlichen ebene Elemente (12-16), die angrenzend aneinander positioniert sind und jeweils erste und zweite Oberflächen (18-28) haben; wobei der Steuerungsknopf angrenzend an die erste Oberfläche (18) des ersten ebenen Elements (12) positioniert ist; wobei die zweite Oberfläche (20) des ersten ebenen Elements und die erste Oberfläche (22) des zweiten ebenen Elements (14) erste komplementäre Gleiteinrichtungen (32) haben, die ermöglichen, dass die ersten und zweiten ebenen Elemente relativ zueinander in eine erste Richtung (X) gleiten können; wobei die zweite Oberfläche (24) des zweiten ebenen Elements und die erste Oberfläche (26) des dritten ebenen Elements (16) zweite komplementäre Gleiteinrichtungen (38) haben, die ermöglichen, dass die zweiten und dritten ebenen Elemente relativ zueinander in eine zweite Richtung (Y) im Wesentlichen senkrecht zu der ersten Richtung gleiten können; wobei die ersten und zweiten Richtungen in einer Ebene liegen, die im Wesentlichen parallel zu den Ebenen der planaren Elemente ist; einen röhrenförmigen Schaft (44), der sich durch Öffnungen (46, 48) in den ersten und zweiten planaren Elementen erstreckt und an dem dritten ebenen Element befestigt ist, wobei der röhrenförmige Schaft eine Längsachse (Z) hat, die im Wesentlichen senkrecht zu den Ebenen der planaren Elemente ist, und eine sich radial erstreckende Oberfläche (50), die gleitend die erste Oberfläche des ersten ebenen Elements kontaktiert; und einen Steuerungsknopf-Schaft (52), der in dem röhrenförmigen Schaft angebracht ist und an dem Steuerungsknopf befestigt ist.

2. Eine Bewegungssteuerungs-Baugruppe gemäß Anspruch 1, wobei die erste komplementäre Gleiteinrichtung (32) eine sich diametral erstreckende Erhöhung (34) aufweist, die an einer der zweiten Oberfläche (20) des ersten ebenen Elements (12) oder der ersten Oberfläche (22) des zweiten ebenen Elements (14) ausgebildet ist, und eine entsprechende sich diametral erstreckende Einkerbung (36), die in der anderen der zweiten Oberfläche (20) des ersten ebenen Elements (12) oder der ersten Oberfläche (22) des zweiten ebenen Elements (14) ausgebildet ist.

3. Eine Bewegungssteuerungs-Baugruppe gemäß Anspruch 1, wobei die zweite komplementäre Gleiteinrichtung (38) eine sich diametral erstreckende Erhöhung (40) aufweist, die an einer der zweiten Oberfläche (24) des zweiten ebenen Elements (14) oder der ersten Oberfläche (26) des dritten ebenen Elements (16) ausgebildet ist, und eine entsprechende sich diametral erstreckende Einkerbung (42), die in der anderen der zweiten Oberfläche (24) des zweiten ebenen Elements (14) oder der ersten Oberfläche (26) des dritten ebenen Elements (16) ausgebildet ist.

4. Eine Bewegungssteuerungs-Baugruppe gemäß einem der Ansprüche 1 bis 3, wobei die sich radial erstreckende Oberfläche (50) des röhrenförmigen Schafts (44) durch einen sich radial erstreckenden Kragen (50) definiert ist, der integral mit dem röhrenförmigen Schaft ausgebildet ist.

5. Eine Bewegungssteuerungs-Baugruppe gemäß einem der Ansprüche 1 bis 4, wobei der röhrenförmige Schaft (44) an dem dritten ebenen Element (16) durch eine Schnappverbindung befestigt ist.

6. Eine Bewegungssteuerungs-Baugruppe gemäß einem der Ansprüche 1 bis 5, wobei sich der Steuerungsknopf-Schaft (52) durch den röhrenförmigen Schaft (44) erstreckt.

7. Eine Bewegungssteuerungs-Baugruppe gemäß einem der Ansprüche 1 bis 6, wobei der Steuerungsknopf-Schaft (52) in dem röhrenförmigen Schaft (44) verschiebbar angebracht ist für eine gleitende Bewegung entlang der Längsachse (Z) relativ zu dem röhrenförmigen Schaft.

8. Eine Bewegungssteuerungs-Baugruppe gemäß einem der Ansprüche 1 bis 7, wobei der Steuerungsknopf-Schaft (52) in dem röhrenförmigen Schaft (44) rotierbar angebracht ist für eine rotierende Bewegung um die Längsachse (Z) relativ zu dem röhrenförmigen Schaft.

9. Eine Bewegungssteuerungs-Baugruppe gemäß Anspruch 8, wobei ein oder mehrere Indizierungsfinger (56) den Steuerungsknopf (30) und den röhrenförmigen Schaft (44) in Eingriff halten.

10. Eine Bewegungssteuerungs-Baugruppe gemäß Anspruch 9, wobei der oder jeder Indizierungsfinger (56) eine Kugel oder einen Kolben (64) aufweist, die/der gleitend in einer sich radial nach außen erstreckenden Bohrung (62) angeordnet ist, die mit der röhrenförmigen Schaft (44) ausgebildet ist und in Eingriff mit der inneren Oberfläche (60) des Steuerungsknopfs (30) gebracht ist.

## Revendications

1. Ensemble de commande de mouvement comprenant un bouton de commande (30) ; et un premier, un second et un troisième élément sensiblement planaires (12-16) positionnés adjacents les uns aux autres, et ayant chacun une première et une seconde surface (18-28) ; dans lequel le bouton de commande est positionné adjacent à la première surface (18) du premier élément planaire (12) ; dans lequel la seconde surface (20) du premier élément planaire et la première surface (22) du second élément planaire (14) ont des premiers moyens de coulissement complémentaires (32) permettant au premier et au second élément planaire de coulisser l'un par rapport à l'autre dans une première direction (X) ; dans lequel la seconde surface (24) du second élément planaire et la première surface (26) du troisième élément planaire (16) ont des seconds moyens de coulissement complémentaires (38) permettant au second et au troisième élément planaire de coulisser l'un par rapport à l'autre dans une seconde direction (Y) sensiblement perpendiculaire à la première direction ; dans lequel la première et la seconde direction sont situées dans un plan sensiblement parallèle au plan des éléments planaires ; un arbre tubulaire (44) s'étendant à travers des ouvertures (46, 48) dans le premier et le second élément planaire et étant fixé au troisième élément planaire, l'arbre tubulaire ayant un axe longitudinal (Z) sensiblement perpendiculaire au plan des éléments planaires et une surface s'étendant radialement (50) qui engage en coulissement la première surface du premier élément planaire ; et un arbre de bouton de commande (52) monté dans l'arbre tubulaire et attaché au bouton de commande.

2. Ensemble de commande de mouvement selon la revendication 1, dans lequel les premiers moyens de coulissement complémentaires (32) comprennent une nervure (34) s'étendant diamétralement et formée sur une surface parmi la seconde surface (20) du premier élément planaire (12) ou la première surface (22) du second élément planaire (14), et une rainure correspondante (36) s'étendant diamétralement et formée dans l'autre surface parmi la seconde surface (20) du premier élément planaire (12) ou la première surface (22) du second élément planaire (14).

3. Ensemble de commande de mouvement selon la revendication 1, dans lequel les seconds moyens de coulissement complémentaires (38) comprennent une nervure (40) s'étendant diamétralement et formée sur une surface parmi la seconde surface (24) du second élément planaire (14) ou la première surface (26) du premier élément planaire (16) et une rainure correspondante (42) s'étendant diamétralement et formée dans l'autre surface parmi la seconde surface (24) du second élément planaire (14) ou la première surface (26) du troisième élément planaire (16).

4. Ensemble de commande de mouvement selon l'une quelconque des revendications 1 à 3, dans lequel la surface s'étendant radialement (50) de l'arbre tubulaire (44) est définie par un collier s'étendant radialement (50) formé intégralement avec l'arbre tubulaire.

5. Ensemble de commande de mouvement selon l'une quelconque des revendications 1 à 4, dans lequel l'arbre tubulaire (44) est fixé sur le troisième élément planaire (16) par encliquetage.

6. Ensemble de commande de mouvement selon l'une quelconque des revendications 1 à 5, dans lequel l'arbre (52) du bouton de commande s'étend à travers l'arbre tubulaire (44).

7. Ensemble de commande de mouvement selon l'une quelconque des revendications 1 à 6, dans lequel l'arbre (52) du bouton de commande est monté en coulissement dans l'arbre tubulaire (44) pour un mouvement de coulissement le long de l'axe longitudinal (Z) par rapport à l'arbre tubulaire.

8. Ensemble de commande de mouvement selon l'une quelconque des revendications 1 à 7, dans lequel l'arbre (52) du bouton de commande est monté en rotation dans l'arbre tubulaire (44) pour un mouvement de rotation autour de l'axe longitudinal (Z) par rapport à l'arbre tubulaire.

9. Ensemble de commande de mouvement selon la revendication 8, dans lequel un ou plusieurs doigts d'indexation (56) engagent le bouton de commande (30) et l'arbre tubulaire (44).

10. Ensemble de commande de mouvement selon la revendication 9, dans lequel le ou chaque doigt d'indexation (56) comprend une bille ou un piston (64) monté en coulissement dans un perçage (62) s'étendant radialement vers l'extérieur formé avec l'arbre tubulaire (44) et sollicité en engagement avec la surface intérieure (60) du bouton de commande (30).
